# EUROPÄISCHE PATENTSCHRIFT

(11) **EP 2 303 650 B1**
(45) Veröffentlichungstag und Bekanntmachung des Hinweises auf die Patenterteilung: **30.10.2013**
(21) Anmeldenummer: 09772247.4
(22) Anmeldetag: 29.05.2009
(51) Int. Cl.: B60S 1/38

(54) **BAUREIHE EINES WISCHBLATTS**
TYPE SERIES OF A WIPER BLADE
SERIE DE MODELES DE BALAI D'ESSUIE-GLACE

(30) Priorität: 30.06.2008 DE 102008040033
(43) Veröffentlichungstag der Anmeldung: 06.04.2011
(73) Patentinhaber: Robert Bosch GmbH, 70442 Stuttgart (DE)
(72) Erfinder: OP'T ROODT, Inigo, B-3500 Hasselt (BE); DE BLOCK, Peter, B-3545 Halen (BE); JANS, Geert, B-3630 Maasmechelen (BE); WYNEN, Paul, B-3910 Neerpelt (BE); VERBURGH, Yves, B-2870 Puurs (BE); DUSART, Mario, B-3800 Sint-Truiden (BE); BEELEN, Hans, B-3540 Herk de Stad (BE); FATAN, Bart, B-3510 Kermt (BE); GHYS, Frank, B-3360 Bierbeek (BE); WINDMOLDERS, Eric, B-3510 Kermt (BE); BUBBA, Marcello, B-3001 Heverlee (BE)
(86) Internationale Anmeldenummer: PCT/EP2009/056591
(87) Internationale Veröffentlichungsnummer: WO 2010/000547

(56) Entgegenhaltungen:
- EP-A- 1 627 787
- WO-A-2007/142390
- DE-A1- 19 801 058
- DE-A1-102005 062 462
- DE-A1-102006 020 524
- DE-U1- 20 221 548
- DE-U1-202007 011 262
- FR-A- 2 851 976

## Beschreibung

### Stand der Technik

Die Erfindung geht von einem Wischblatt nach dem Oberbegriff des Anspruchs 1 aus.

Unter einer Baureihe eines Wischblatts werden Wischblätter verstanden, die sich in wesentlichen Konstruktionsmerkmalen, insbesondere in ihren äußeren Querschnittkonturen gleichen, während untergeordnete Konstruktionsmerkmale, z.B. Anschlusselemente oder Federschienen, unterschiedlich und an den jeweiligen Einsatzfall angepasst sind.

Aus der DE 10 2005 062 462 A1 ist ein Wischblatt mit einem Träger aus Kunststoff bekannt, der zu einer Wischleiste hin zwei einander zugewandte, in Längsrichtung des Wischblatts verlaufende im Querschnitt winklige Halteschienen aufweist. Diese bilden einen im Querschnitt annähernd rechteckigen Zwischenraum mit einem Längsspalt und dienen zur Aufnahme einer Kopfleisteleiste der Wischleiste. An dem Träger sind ein Spoiler aus Kunststoff und mindestens eine Federschiene vorgesehen. Diese ist in einem Längskanal des Trägers bzw. des Spoilers angeordnet. Der Träger, der aus einem härteren Werkstoff als der Spoiler hergestellt ist, ist mit diesem über nach innen gerichtete, winklige Halteschienen formschlüssig verbunden oder wird in einem Mehrstoffextrusionsverfahren mit dem Träger einstückig in einen Arbeitsgang hergestellt. Der Träger steht zusammen mit der Federschiene ein Stück weit über das Ende des Spoilerprofils vor. Der Träger besitzt in Höhe des Längskanals seitliche Stützleisten mit seitlichen Aussparungen, in die Rastnasen von Endkappen einrasten. Die Endkappen sind auf den Stützleisten geführt.

Bei einem Ausführungsbeispiel sind zwei Federschienen nebeneinander angeordnet, wobei sie teilweise in Längsnuten des Trägers angeordnet sind, die durch eine Trennwand voneinander getrennt sind, und teilweise in Längsführungen des Spoilers, die die Federschienen an den Außenseiten umfassen.

Ferner ist aus der DE 10 2006 020 524 A1 ein Wischblatt bekannt, das in einer Kopfleiste seiner Wischleiste einen Längskanal für eine erste Federschiene aufweist. Die Kopfleiste und die Federschiene werden seitlich und von unten von Halteschienen des Spoilers umfasst. Der Spoiler besitzt einen weiteren Längskanal für eine weitere Federschiene, die parallel zur ersten Federschiene verläuft und kürzer als diese ist. Die Federschienen können einen Querschnitt aufweisen, der über die Länge der Federschienen in seiner Breite und/oder Höhe variiert.

Aus der DE 198 01 058 A1 ist ein Wischblatt bekannt, das aus jeweils einer Wischleiste einem Träger, zwei Federschienen, die in Längskanälen des Trägers parallel zueinander untergebracht sind, zwei Endkappen und einem Anschlusselement aufgebaut ist, wobei die Federschienen seitlich nicht aus den Längskanalen vorstehen. Ferner ist aus der DE 202 21 548 Ul ein Wischblatt bekannt, das aus jeweils einer Wischleiste, einem Träger, zwei Federschienen die in Längskanälen des Trägers parallel zueinander untergebracht sind und einem Anschlusselement aufgebaut, wobei der Spoiler an dem Träger verklebt ist und im mittleren Bereich eine Aussparung für ein Anschlusselement aufweist.

### Offenbarung der Erfindung

Nach der Erfindung ist das Wischblatt ein Teil einer Baureihe, bei der sich die einzelnen Wischblätter der Baureihe bei gleichen äußeren Querschnittkonturen durch die Querschnittflächen der Längskanäle und der Federschienen unterscheiden. Somit können Baureihen von Wischblättern erstellt werden, die sich in ihrer äußeren Erscheinungsform nicht oder nur unwesentlich unterscheiden, jedoch auf Grund der unterschiedlichen Querschnittflächen der Federschienen in ihrer Federcharakteristik dem einzelnen Einsatzfall angepasst sind.

Gemäß eines nicht angesprochenen Beispiel verlaufen die Längskanäle des Trägers nebeneinander und sind durch eine Trennwand voneinander getrennt. Dabei sind die Breiten der Federschienen der einzelnen Wischblätter der Baureihe unter Beibehaltung der Breite des Trägers unterschiedlich, indem die Stärke der Trennwand entsprechend angepasst ist. Bei breiteren Federschienen ist die Trennwand entsprechend schmaler, bei schmaleren Federschienen entsprechend breiter. Die Längskanäle können nach außen geschlossen oder offen sein. Bei der zweiten Alternativen stehen die Federschienen seitlich nicht aus den Längskanälen vor, sodass die Breiten der Wischblätter innerhalb der Baureihe gleich sind.

Gemäß der Erfindung sind die Federschienen übereinander in einem Längskanal untergebracht, der durch Längsrippen an den Innenseiten seiner Seitenwände in der Höhe unterteilt ist, sodass die Federschienen in ihrer Bewegungsfreiheit voneinander getrennt sind. Die Dicken der Federschienen der einzelnen Wischblätter der Baureihe unterscheiden sich voneinander, wobei die Wandstärken der Deckwand, der Längsrippen und/oder der unteren Begrenzungswand des Längskanals unter Beibehaltung der äußeren Querschnittkonturen, insbesondere der Breiten, entsprechend angepasst sind. Bei größeren Dicken der Federschienen werden die Wandstärken entsprechend reduziert.

In vorteilhafter Weise können die Träger auf der der Wischleiste zugewandten Seite winklige Halteschienen besitzen, deren freie Schenkel in Längsnuten einer Kopfleiste der Wischleiste eingreifen. Nach einem anderen Ausführungsbeispiel sind die Wischleiste und der Spoiler in einem Zweistoffextrusionsverfahren an dem Träger aus einem härteren Werkstoff angeformt. Durch die erfindungsgemäße Gestaltung der Wischblätter der Baureihe können in diesem Fall die Wischblätter in einem Extrusionsverfahren mit nur geringfügigen Änderungen des Werkzeugs kostengünstig hergestellt werden.

Je nach Bedarf wird im mittleren Bereich bis auf den Träger ein Fenster für ein Anschlusselement aus dem Spoiler ausgeschnitten. Die Wischblätter einer Baureihe können mit verschiedenen Anschlusselementen und Endkappen kombiniert werden. Bei einer Ausgestaltung besitzt das Anschlusselement ein Mittelteil, an dem seitliche Füße angeformt sind, die den Träger seitlich und von unten umgreifen und mit mindestens zwei Vorsprüngen an einander gegenüberliegenden Füßen in entsprechende Aussparungen des Trägers oder der Federschiene eingreifen. Ein solches Anschlusselement wird zweckmäßigerweise mit einer Abdeckung kombiniert, die mit Seitenwänden den Träger im Bereich des Fensters seitlich umfasst, wobei Führungsblöcke an den Innenseiten der Seitenwände in seitliche Aussparungen eingreifen und die Federschienen in Führungsnuten der Führungsblöcke eingesetzt sind. Somit wird die Abdeckung durch die Federschienen in den Aussparungen des Trägers verriegelt. Die Abdeckung kleidet das Fenster aus und schließt mit Anschlussprofilen an die Spoilerprofile stirnseitig an. Das gleiche Befestigungsprinzip ist auch bei einem Anschlusselement anwendbar, das wie die Abdeckung aufgebaut ist, aber zusätzlich Lagerelemente, z.B. einen Lagerbolzen oder eine Nabe, zum gelenkigen Verbinden mit einem Wischarm hat.

Nach einer weiteren Ausgestaltung weist der Träger an den Außenseiten seiner Seitenwände Außenrippen auf. Diese haben zur Seite hin offene Aussparungen. Das dazu passende Anschlusselement umfasst mit seinen Füßen die Seitenwände des Trägers. Im Bereich der Aussparungen der Außenrippen sind an den Füßen ebenfalls Aussparungen vorgesehen, die zwischen sich Stege einschließen. Die Stege passen in montiertem Zustand in die Aussparungen der Außenrippen und füllen diese aus, sodass das Anschlusselement am Träger fixiert ist. Das Anschlusselement kann quer zur Längsrichtung des Trägers auf die Außenrippen geklippst werden.

Wenn die erfindungsgemäße Baureihe Wischblätter mit übereinander liegenden Federschienen aufweist, ist es vorteilhaft, dass die untere Federschiene länger ist als die obere Federschiene und ein Stück weit aus dem Träger heraus und in die Endkappe hineinragt. In montiertem Zustand greifen Rastnocken der Endkappen in Stanzlöcher an den Enden der unteren Schiene ein. Durch die Endkappe und die untere Federschiene werden die Bauteile des Wischblatts in einfacher Weise in Längsrichtung zusammengehalten.

### Kurze Beschreibung der Zeichnungen

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Ansicht eines nicht angesprochenen Wischblatts einer Baureihe mit einem Anschlusselement vor der Montage,
- Fig. 2: eine vergrößerte, perspektivische Ansicht des Anschlusselements nach Fig.1,
- Fig. 3: ein Wischblatt nach Fig. 1 mit demontierten Endkappen,
- Fig. 4: einen perspektivischen Querschnitt durch einen Träger entsprechend der Linie IV-IV in Fig. 1,
- Fig. 5: einen Querschnitt durch ein Wischblatt entsprechend der Linie IV-IV in Fig. 1,
- Fig. 6: eine Variante zu Fig. 5 mit schmaleren Federschienen,
- Fig. 7: eine Variante zu Fig. 4 mit seitlich offenen Längskanälen und einer anextrudierten Wischleiste,
- Fig. 8: eine Variante zu Fig. 5 mit seitlich offenen Längskanälen,
- Fig. 9: eine Variante zu Fig. 8 mit schmaleren Federschienen,
- Fig. 10: eine Variante zu Fig. 3 mit einer Abdeckung,
- Fig. 11: eine perspektivische Darstellung einer Abdeckung nach Fig. 10 von unten,
- Fig. 12: einen Teilausschnitt einer Abdeckung im Bereich einer Verriegelung durch eine Federschiene,
- Fig. 13: eine erfindungsgemäße Variante zu Fig. 1 mit zwei übereinander liegenden Federschienen,
- Fig. 14: einen perspektivischen Querschnitt durch einen Träger entsprechend der Linie XIV-XIV in Fig. 13,
- Fig. 15: einen Querschnitt durch ein Wischblatt entsprechend der Linie XIV-XIV in Fig. 13,
- Fig. 16: eine Variante zu Fig. 15 mit dickeren Federschienen,
- Fig. 17: einen perspektivischen Längsschnitt durch ein Wischblatt im Bereich seiner Endkappe entsprechend der Linie XVII-XVII in Fig. 13,
- Fig. 18: eine perspektivische Darstellung einer Anordnung der Federschienen am Ende eines Wischblatts,
- Fig. 19: eine perspektivische Darstellung eines Teilausschnitts des montierten Anschlusselements nach Fig. 13 und
- Fig. 20: eine vergrößerte perspektivische Darstellung eines Anschlusselements nach Fig. 13.

### Ausführungsformen der Erfindung

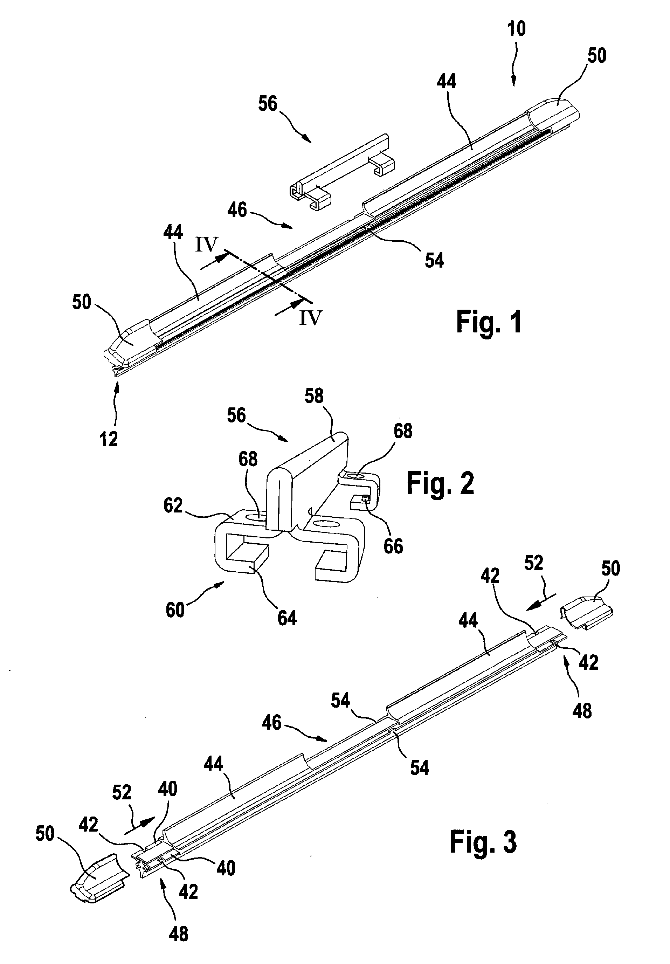

Das in Fig. 1 dargestellte Wischblatt 10 einer Baureihe umfasst eine Wischleiste 12, einen Träger 24, einen Spoiler 44 und zwei Endkappen 50 sowie zwei als Tragelement dienende Federschienen 40. Der Träger 24, der zweckmäßigerweise aus einem härteren Kunststoff hergestellt ist als die Wischleiste 12 und der Spoiler 44, wird in der Regel zusammen mit dem Spoiler 44 in einem Zweistoffextrusionsverfahren hergestellt. Er besitzt zwei parallel verlaufende, nebeneinander liegende Längskanäle 34, die durch eine Trennwand 74 von einander getrennt sind. Die Längskanäle 34 werden zum Spoiler 44 hin durch eine Deckwand 38 begrenzt, der eine Begrenzungswand 39 gegenüberliegt. Die Seiten der Längskanäle 34 sind durch Seitenwände 36 geschlossen. An der Außenseite der Begrenzungswand 39 sind parallel verlaufende, winklige Halteschienen 26 angeformt, deren freie, einander zugewandte Schenkel 28 einen Längsspalt 32 bilden. Der von den Halteschienen 26 und der Begrenzungswand 39 eingeschlossene Freiraum 41 dient zur Aufnahme einer Kopfleiste 20 der Wischleiste 12, wobei die freien Schenkel 28 in Längsnuten 30 zu beiden Seiten eines Stegs 22 eingreifen. Der Steg 22 verbindet die Kopfleiste 20 mit Stützleisten 18, die wiederum über einen Kippsteg 16 mit einer Wischlippe 14 der Wischleiste 12 verbunden sind.

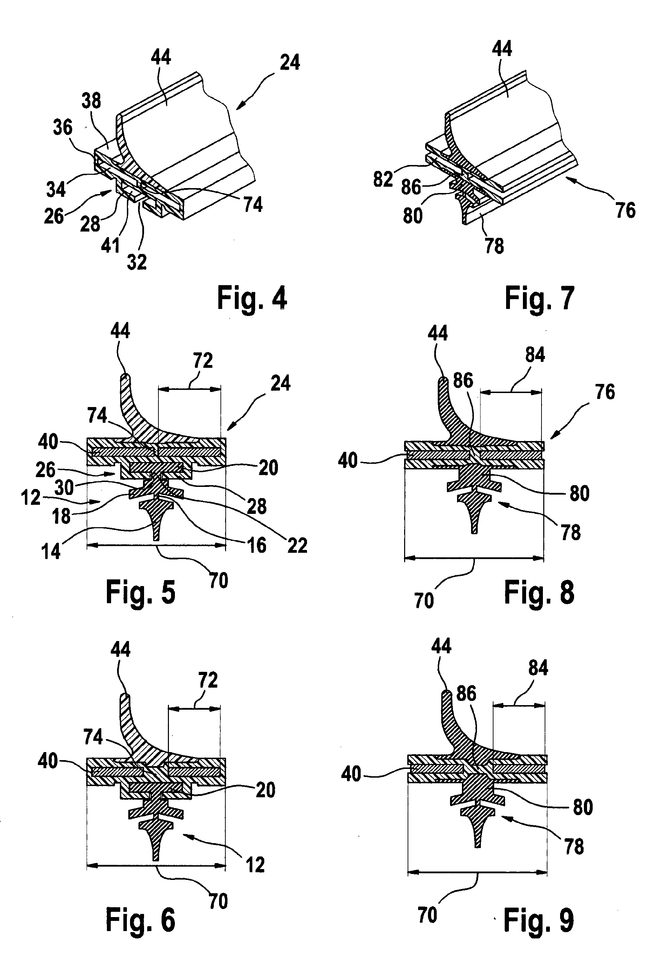

Die Fig. 5 bis 9 zeigen verschiedene Wischblätter 10 einer Baureihe. Sie besitzen im Wesentlichen die gleiche Querschnittkontur. Insbesondere haben sie eine gleiche Breite 70, während sie sich in der Breite ihrer Federschienen 40 unterscheiden. Die unterschiedlichen Breiten werden durch unterschiedlich breite Trennwände 74 bzw. 86 ausgeglichen, sodass sich die Breiten 70 trotz der unterschiedlichen Breiten 72 bzw. 84 der Federschienen 40 nicht ändern.

Die Ausführung des Wischblatts 10 nach Fig. 7 bis 9 unterscheidet sich von der Ausführung nach Fig. 4 bis 6 dadurch, dass eine Wischleiste 78 mit einer Kopfleiste 80 in einem Mehrstoffextrusionsverfahren an dem Träger 76 angeformt ist. Ferner besitzt der Träger 76 seitlich offene Längskanäle 82, in die die Federschienen 40 eingesetzt sind, ohne dass sie nach außen vorstehen. Somit wird die Breite 70 des Trägers 76 und damit des Wischblatts 10 durch die größte Erstreckung des Trägers 76 quer zur Längsrichtung des Wischblatts 10 bestimmt.

Die Federschienen 40 besitzen an ihren Enden an den Außenseiten Aussparungen 42, in die innen liegende, nicht sichtbare Nocken der Endkappen 50 einrasten, wenn sie während der Montage in Montagerichtung 52 auf das Ende der Wischleiste 12 und des Trägers 24 geschoben werden. Zu diesem Zweck besitzt der Spoiler 44 und der Träger 24 an den Enden jeweils einen Ausschnitt 48, der von dem Träger nur einen mittleren Teil stehen lässt, sodass oberhalb der Deckwand 38 der Spoiler 44 in diesem Bereich abgetrennt ist, und die Längskanäle 34 etwa bis zu den Halteschienen 26 abgeschnitten sind, sodass die Enden der Federschienen 40 zu den Außenseiten hin halb frei liegen.

Im mittleren Bereich des Wischblatts 10 ist aus dem Spoiler 44 ein Fenster 46 bis auf den Träger 24 ausgeschnitten, um ein Anschlusselement 56 anbringen zu können. Das Anschlusselement 56 weist ein Mittelteil 58 auf, das sich in Längsrichtung des Wischblatts 10 erstreckt und das mit seitlichen Krallen 60 den Träger 24 umfasst, wobei untere Schenkel 64 der Krallen 60 an der Begrenzungswand 39 des Trägers 24 anliegen, während obere Schenkel 62 über vorspringende Krafteinleitungspunkte 68 an der Deckwand 38 anliegen. An zwei einander gegenüberliegenden unteren Schenkeln 64 sind an deren Innenseiten Vorsprünge 66 vorgesehen, die in entsprechende Aussparungen 54 eingreifen und das Anschlusselement 56 in Längsrichtung fixieren. Die Aussparungen 54 sind am Träger 24 im Bereich des Fensters 46 angeordnet.

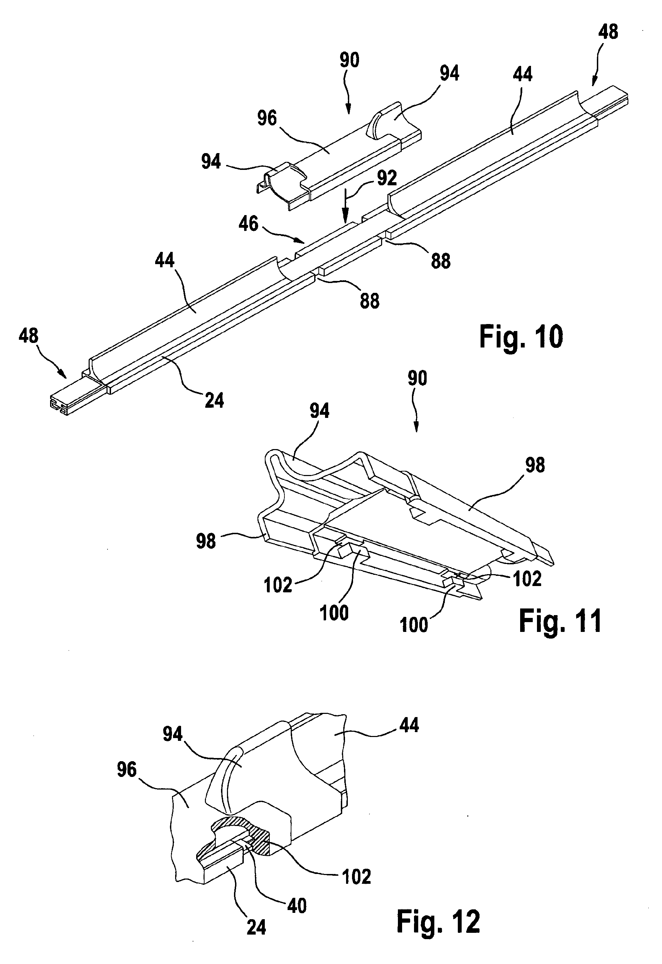

Bei der Ausführung nach Fig. 10 bis 12 ist das Fenster 46 im Spoiler 44 durch eine Abdeckung 90 ausgekleidet, die in Montagerichtung 92 auf den Träger 24 aufgesetzt wird. Die Abdeckung 90 besitzt an den Innenseiten ihrer Seitenwände 98, die eine Deckwand 96 miteinander verbindet, Führungsblöcke 100, die paarweise einander gegenüberliegen und in Längsrichtung des Wischblatts 10 jeweils eine Führungsnut 102 haben. Die Führungsblöcke 100 werden in Montagerichtung 92 in Aussparungen 88 an den Seiten des Trägers 24 geschoben, bis sich die Führungsnuten 102 mit den Längskanälen 34 des Trägers 24 decken. In dieser Position werden die Federschienen 40 eingesetzt und durch die Führungsnuten 102 geschoben. Dadurch wird die Abdeckung 90 verriegelt und am Träger 24 befestigt. In Längsrichtung ist die Abdeckung durch die Stirnseiten der Führungsblöcke 100 in den Aussparungen 88 des Trägers 24 gesichert. Das gleiche Befestigungsprinzip kann auch für ein entsprechendes Anschlusselement verwendet werden, das zusätzlich zur Abdeckung 90 Lagerelemente in Form einer Nabe, Lagerzapfen, Bolzen oder dgl. aufweist. Zum harmonischen Anschluss der Abdeckung 90 an die Spoiler 44 besitzt die Abdeckung 90 an ihren Stirnseiten Anschlussprofile 94, die die Spoiler 44 ein Stück weit überlappen.

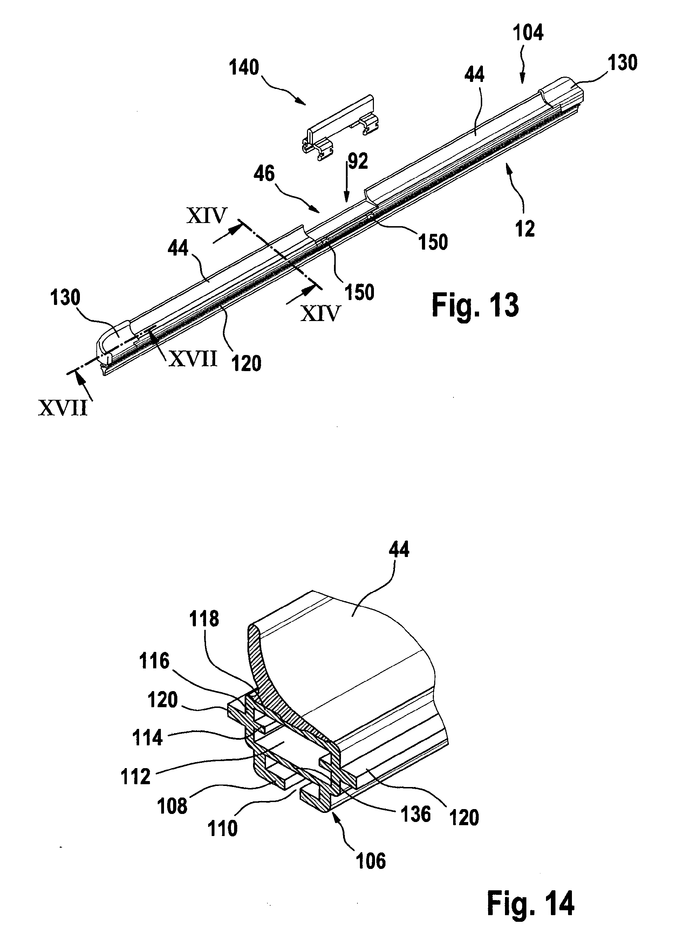

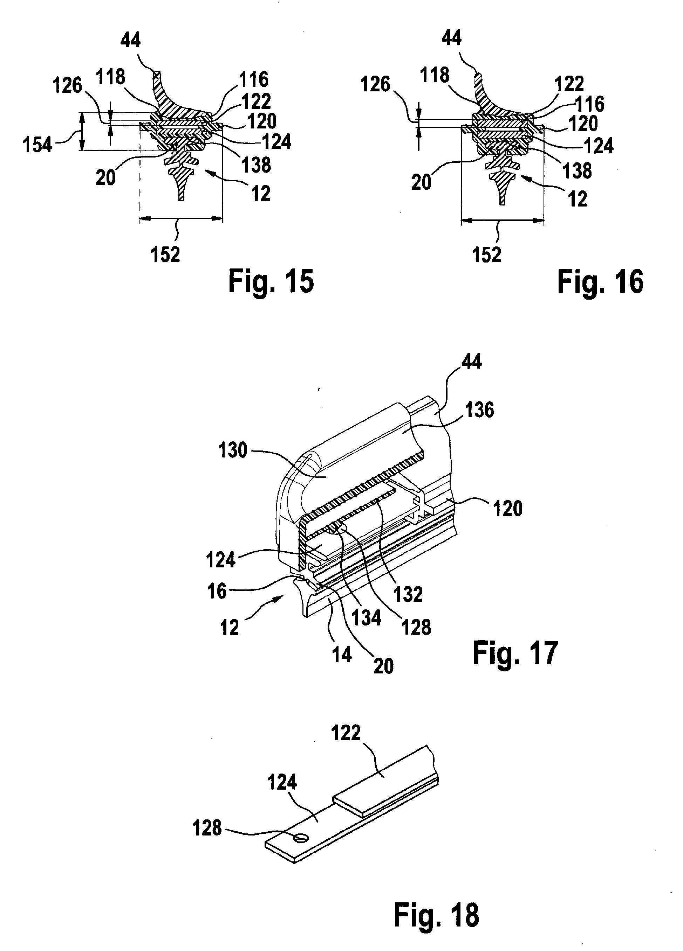

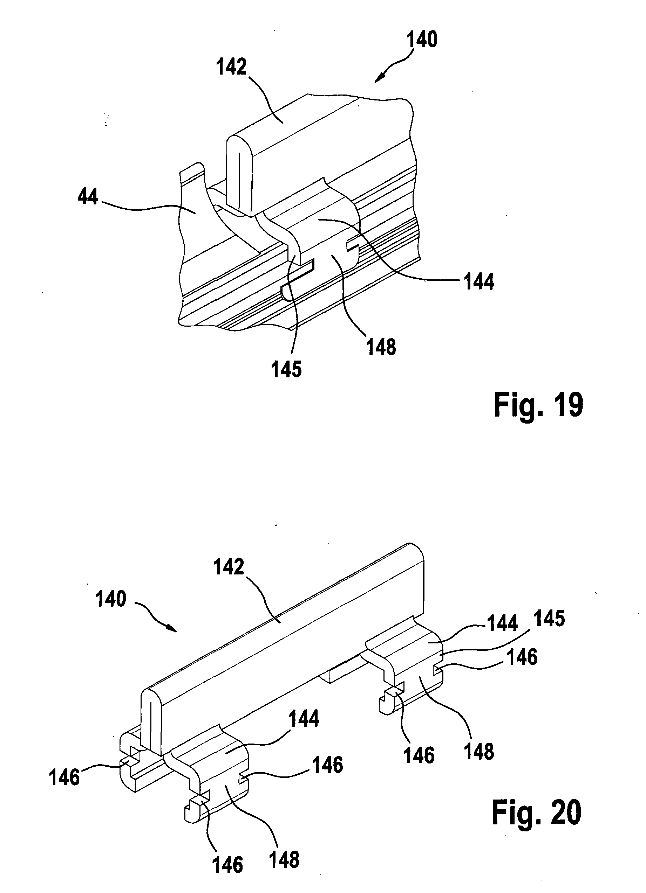

Die Fig. 13 bis 20 zeigen eine Baureihe von Wischblättern 104, bei denen zwei Federschienen 122, 124 übereinander in einem Längskanal 112 untergebracht sind. Der Längskanal 112 ist in seiner Höhe durch Längsrippen 114 an den Seitenwänden 116 unterteilt, sodass die untere Federschiene 124 sich frei von der oberen Federschiene 122 bewegen kann. Der Längskanal 112 besitzt außer den Seitenwänden 116 eine Deckwand 118, an die sich der Spoiler 44 anschließt. Der Deckwand 118 gegenüber befindet sich eine Begrenzungswand 138, an deren Außenseite zur Wischleiste 12 hin zwei einander gegenüberliegende, winklige Halteschienen 108 angeformt sind. Die Halteschienen 108 bilden zwischen sich einen Längsspalt 110 und dienen zur Aufnahme der Kopfleiste 20 der Wischleiste 12. Die Wischblätter 104 nach Fig. 15 und Fig. 16 der Baureihe 104 unterscheiden sich durch ihre Dicke 126 der Federschienen 122, 124. Die geringere Dicke der Federschienen 122, 124 nach Fig. 15 wird bei gleichen äußeren Abmessungen, insbesondere bei gleicher Höhe 154, dadurch ermöglicht, dass die den Längskanal bestimmenden Wände, nämlich die Deckwand 118, die untere Begrenzungswand 138 und die inneren Längsrippen 114 entsprechend verstärkt sind, während eine oder mehrere dieser Wände 114, 118, 138 bei dickeren Federschienen 122, 124 nach Fig. 16 entsprechend dünner dimensioniert werden.

Der Träger 106 besitzt an den Außenseiten seiner Seitenwände 116 Außenrippen 120, die etwa in gleicher Höhe wie die Längsrippen 114 an den Innenseiten der Seitenwände 116 verlaufen. Durch die Außenrippen 120 wird die Breite 152 der Wischblätter 104 dieser Baureihe bestimmt.

Die untere Federschiene 124 und die Wischleiste 12 ragen an den Enden des Trägers 106 ein Stück weit aus diesem hervor, während die obere Federschiene 122 kürzer ist als die untere Federschiene 124 und vollständig im Längskanal 112 untergebracht ist. In dem vorstehenden Bereich besitzt die untere Federschiene 124 ein Stanzloch 128. Bei der Montage von Endkappen 130 in Längsrichtung des Wischblatts 104 rastet jeweils ein Rastnocken 134, der an einer Federzunge 132 der Endkappe 130 vorgesehen ist, in das zugeordnete Stanzloch 128 ein, sodass die Endkappen 130 die zwischen ihnen liegenden Bauteile in Längsrichtung fixieren. Dabei überlappen die Endkappen 130 mit Anschlussprofilen 136 die Spoiler 44.

Im mittleren Bereich ist in Montagerichtung 92 ein Anschlusselement 140 auf die Außenrippen 120 geklippst. Hierzu besitzt das Anschlusselement 140 Füße 144, die von einem sich in Längsrichtung des Wischblatts 104 erstreckenden Mittelteil 142 ausgehend seitlich den Träger 106 umfassen. Die Füße 144 besitzen an ihren etwa parallel zum Mittelteil 142 verlaufenden Schenkeln 145 Aussparungen 146, die zwischen sich einen Steg 148 bilden. Bei der Montage greifen die Stege 148 der Füße 144 in entsprechende Aussparungen 150 der Außenrippen 120 des Trägers 106, sodass das Anschlusselement 140 auf den Träger 106 aufgeklippst werden kann. Die Außenrippen 120, die in die Aussparungen 146 passend eingreifen, fixieren das Anschlusselement 140 sowohl in Längsrichtung als auch in Montagerichtung 92.

## Patentansprüche

1. Wischblatt (10, 104), das aus einer Wischleiste (12), einem Träger (24, 76, 106), zwei Federschienen (40, 122, 124), die in Längskanälen (34, 82, 112) des Trägers (24, 76, 106) parallel zueinander untergebracht sind, zwei Endkappen (50, 130) und einem Anschlusselement (56, 140) aufgebaut sind, **dadurch gekennzeichnet, dass** es ein Teil einer Baureihe ist, bei der sich die einzelnen Wischblätter (10, 104) der Baureihe bei gleichen äußeren Querschnittkonturen durch die Querschnittflächen der Längskanäle (34, 82, 112) und der Federschienen (40, 122, 124) unterscheiden, und die Federschienen (122, 124) übereinander in einem Längskanal (112) untergebracht sind, der durch Längsrippen (114) an den Innenseiten seiner Seitenwände (116) in der Höhe unterteilt ist, wobei sich die Dicken der Federschienen (122, 124) der einzelnen Wischblätter (10) voneinander unterscheiden und die Wandstärken einer Deckwand (118), der Längsrippen (114) und/oder der unteren Begrenzungswand (138) des Längskanals (112) unter Beibehaltung der äußeren Querschnittkonturen, insbesondere der Breiten (152) und Höhen (153), entsprechend angepasst sind.

2. Wischblatt (10, 104) nach einem der vorhergehenden Ansprüche, **dadurch gekennzeichnet, dass** der Träger (24, 76) auf der der Wischleiste (12) zugewandten Seite winklige Halteschienen (26) besitzt, deren freie Schenkel (28) in Längsnuten (30) einer Kopfleiste (20) der Wischleiste (12) eingreifen.

3. Wischblatt (10, 104) nach einem der vorhergehenden Ansprüche, **dadurch gekennzeichnet, dass** die Wischleiste (78) und ein Spoiler (44) in einem Zweistoffextrusionsverfahren an dem Träger (76) aus einem härteren Werkstoff angeformt sind.

4. Wischblatt (10, 104) nach einem der vorhergehenden Ansprüche, **dadurch gekennzeichnet, dass** sich die Querschnittflächen der Längskanäle (34, 82, 112) und der Federschienen (40, 122, 124) relativ zu anderen Wischblättern (10, 104) der Baureihe unterscheiden und ein Spoiler (44) in einem Zweistoffextrusionsverfahren an dem Träger (24, 76, 106) angeformt ist und im mittleren Bereich ein Fenster (46) für ein Anschlusselement (56, 140) bis auf den Träger (24, 76, 106) aus dem Spoiler (44) ausgeschnitten ist.

5. Wischblatt (10, 104) nach Anspruch 4, **dadurch gekennzeichnet, dass** das Anschlusselement (56) ein Mittelteil (58) besitzt, an dem seitliche Krallen (60) angeformt sind, die den Träger (56) seitlich und von unten umgreifen und mit mindestens zwei Vorsprüngen (66) an einander gegenüberliegenden Krallen (60) in entsprechende Aussparungen (54) des Trägers (24) oder der Federschienen (40) eingreifen.

6. Wischblatt (10, 104) nach Anspruch 4, **dadurch gekennzeichnet, dass** eine Abdeckung (90) mit Seitenwänden (98) den Träger (24) im Bereich des Fensters (46) seitlich umfasst, wobei Führungsblöcke (100) an den Innenseiten der Seitenwände (98) in seitliche Aussparungen (88) eingreifen und die Federschienen (40) in Führungsnuten (102) der Führungsblöcke (100) eingesetzt sind.

7. Wischblatt (10, 104) nach Anspruch 4, **dadurch gekennzeichnet, dass** der Träger (106) an den Außenseiten seiner Seitenwände (116) Außenrippen (120) aufweist und das Anschlusselement (140) mit seinen Füßen (144) den Träger (106) seitlich umfasst und an den Füßen (144) erste Aussparungen (146) hat, wobei im montierten Zustand Stege (148) zwischen den ersten Aussparungen (146) in zweite Aussparungen (150) der Außenrippen (120) passen.

8. Wischblatt (104) mit übereinander angeordneten Federschienen (122, 124) nach Anspruch 4, **dadurch gekennzeichnet, dass** die untere Federschiene (122) länger ist als die obere Federschiene (124) und ein Stück weit aus dem Träger (106) heraus und in die Endkappen (130) hinein ragt, wobei Rastnokken (134) der Endkappen (130) in Stanzlöcher (128) an den Enden der unteren Federschiene (122) einrasten.

## Claims

1. Wiper blade (10, 104) which is constructed from a wiper strip (12), a support (24, 76, 106), two spring rails (40, 122, 124), which are accommodated parallel to one another in longitudinal channels (34, 82, 112) of the support (24, 76, 106), two end caps (50, 130) and a connection element (56, 140), **characterized in that** it is a part of a series in which, while having identical outer cross-sectional contours, the individual wiper blades (10, 104) of the series differ in terms of the cross-sectional areas of the longitudinal channels (34, 82, 112) and of the spring rails (40, 122, 124), and the spring rails (122, 124) are accommodated above one another in a longitudinal channel (112) which is subdivided in height by means of longitudinal ribs (114) on the inner sides of its side walls (116), wherein the thicknesses of the spring rails (122, 124) of the individual wiper blades (10) differ- from one another and the wall thicknesses of a cover wall (118), of the longitudinal ribs (114) and/or of the lower boundary wall (138) of the longitudinal channel (112) are correspondingly adapted while maintaining the outer cross-sectional contours, in particular the widths (152) and heights (153).

2. Wiper blade (10, 104) according to Claim 1, **characterized in that** the support (24, 76) has, on the side facing the wiper strip (12), angular holding rails (26), whose free legs (28) engage in longitudinal grooves (30) of a head strip (20) of the wiper strip (12).

3. Wiper blade (10, 104) according to one of the preceding claims, **characterized in that** the wiper strip (78) and a spoiler (44) are integrally formed on the support (76) from a harder material in a two-material extrusion process.

4. Wiper blade (10, 104) according to one of the preceding claims, **characterized in that** the cross-sectional areas of the longitudinal channels (34, 82, 112) and of the spring rails (40, 122, 124) differ relative to other wiper blades (10, 104) of the series and a spoiler (44) is integrally formed on the support (24, 76, 106) in a two-material extrusion process and, in the central region, a window (46) for a connection element (56, 140) is cut out of the spoiler (44) up to the support (24, 76, 106).

5. Wiper blade (10, 104) according to Claim 4, **characterized in that** the connection element (56) has a central part (58) on which lateral claws (60) are integrally formed, which claws engage laterally and from below around the support (56) and engage by way of at least two projections (66) on mutually opposite claws (60) into corresponding cutouts (54) of the support (24) or of the spring rails (40).

6. Wiper blade (10, 104) according to Claim 4, **characterized in that** a covering (90) laterally encloses, by way of side walls (98), the support (24) in the region of the window (46), wherein guide blocks (100) on the inner sides of the side walls (98) engage into lateral cutouts (88) and the spring rails (40) are inserted into guide grooves (102) of the guide blocks (100).

7. Wiper blade (10, 104) according to Claim 4, **characterized in that** the support (106) has outer ribs (120) on the outer sides of its side walls (116) and the connection element (140) laterally encloses the support (106) by way of its feet (144) and has first cutouts (146) on the feet (144), wherein, in the mounted state, webs (148) between the first cutouts (146) fit into second cutouts (150) of the outer ribs (120).

8. Wiper blade (104) having spring rails (122, 124) arranged above one another according to Claim 4, **characterized in that** the lower spring rail (122) is longer than the upper spring rail (124) and projects for a distance out of the support (106) and into the end caps (130), wherein latching cams (134) of the end caps (130) latch into punched holes (128) at the ends of the lower spring rail (122).

## Revendications

1. Balai d'essuie-glace (10, 104), constitué d'une raclette de balai d'essuie-glace (12), d'un support (24, 76, 106), de deux rails élastiques (40, 122, 124), qui sont montés parallèlement l'un à l'autre dans des canaux longitudinaux (34, 82, 112) du support (24, 76, 106), de deux embouts d'extrémité (50, 130) et d'un élément de raccordement (56, 140), **caractérisé en ce qu'**il fait partie d'une série de modèles, dans laquelle les balais d'essuie-glace individuels (10, 104) de la série de modèles, présentant les mêmes contours extérieurs en section transversale, se distinguent par les surfaces en section transversale des canaux longitudinaux (34, 82, 112) et des rails élastiques (40, 122, 124), et les rails élastiques (122, 124) sont montés l'un au-dessus de l'autre dans un canal longitudinal (112) qui est divisé en hauteur par des arêtes longitudinales (114) au niveau des côtés internes de ses parois latérales (116), les épaisseurs des rails élastiques (122, 124) des balais d'essuie-glace individuels (10) étant différentes les unes des autres et les épaisseurs de paroi d'une paroi de recouvrement (118), des arêtes longitudinales (114) et/ou de la paroi de limitation inférieure (138) du canal longitudinal (112) étant adaptées en conséquence en conservant les contours extérieurs en section transversale, en particulier les largeurs (152) et les hauteurs (153).

2. Balai d'essuie-glace (10, 104) selon la revendication 1, **caractérisé en ce que** le support (24, 76) possède, sur le côté tourné vers la raclette de balai d'essuie-glace (12), des rails de retenue coudés (26), dont les branches libres (28) s'engagent dans des rainures longitudinales (30) d'une raclette de tête (20) de la raclette de balai d'essuie-glace (12).

3. Balai d'essuie-glace (10, 104) selon l'une quelconque des revendications précédentes, **caractérisé en ce que** la raclette de balai d'essuie-glace (78) et un déflecteur (44) sont façonnés en un matériau relativement dur dans un procédé d'extrusion à deux matériaux sur le support (76).

4. Balai d'essuie-glace (10, 104) selon l'une quelconque des revendications précédentes, **caractérisé en ce que** les surfaces en section transversale des canaux longitudinaux (34, 82, 112) et des rails élastiques (40, 122, 124) se distinguent par rapport à d'autres balais d'essuie-glace (10, 104) de la série de modèles, et un déflecteur (44) est façonné dans un procédé d'extrusion à deux matériaux sur le support (24, 76, 106), et dans la région centrale, une fenêtre (46) pour un élément de raccordement (56, 140) est découpée dans le déflecteur (44) à l'exception du support (24, 76, 106).

5. Balai d'essuie-glace (10, 104) selon la revendication 4, **caractérisé en ce que** l'élément de raccordement (56) possède une partie centrale (58), sur laquelle sont façonnées des griffes latérales (60) qui viennent en prise latéralement et par le dessous autour du support (56) et qui s'engagent avec au moins deux saillies (66) au niveau de griffes mutuellement opposées (60) dans des évidements correspondants (54) du support (24) ou des rails élastiques (40).

6. Balai d'essuie-glace (10, 104) selon la revendication 4, **caractérisé en ce qu'**un recouvrement (90) avec des parois latérales (98) entoure latéralement le support (24) dans la région de la fenêtre (46), des blocs de guidage (100) venant en prise dans des évidements latéraux (88) au niveau des côtés internes des parois latérales (98) et les rails élastiques (40) étant insérés dans des rainures de guidage (102) des blocs de guidage (100).

7. Balai d'essuie-glace (10, 104) selon la revendication 4, **caractérisé en ce que** le support (106) présente des arêtes extérieures (120) au niveau des côtés extérieurs de ses parois latérales (116) et l'élément de raccordement (140) entoure latéralement le support (106) avec ses bases (144) et présente, au niveau des bases (144), des premiers évidements (146), des nervures (148) s'adaptant dans l'état monté entre les premiers évidements (146) dans des deuxièmes évidements (150) des arêtes extérieures (120).

8. Balai d'essuie-glace (104) comprenant des rails élastiques (122, 124) disposés l'un au-dessus de l'autre selon la revendication 4, **caractérisé en ce que** le rail élastique inférieur (122) est plus long que le rail élastique supérieur (124) et fait saillie quelque peu hors du support (106) et pénètre dans les embouts d'extrémité (130), des cames d'encliquetage (134) des embouts d'extrémité (130) s'encliquetant dans des trous estampés (128) au niveau des extrémités du rail élastique inférieur (122).
